(19) Europäisches Patentamt
European Patent Office
Office européen des brevets

(11) **EP 2 486 421 B1**

(12) **EUROPEAN PATENT SPECIFICATION**

(45) Date of publication and mention
of the grant of the patent:
**03.04.2013 Bulletin 2013/14**

(21) Application number: **10771198.8**

(22) Date of filing: **30.09.2010**

(51) Int Cl.:
**G01S 7/52** (2006.01)          **G01S 15/89** (2006.01)

(86) International application number:
**PCT/IB2010/054419**

(87) International publication number:
**WO 2011/042841 (14.04.2011 Gazette 2011/15)**

(54) **ULTRASONIC ANECHOIC IMAGING**

ECHOFREIE ULTRASCHALLBILDGEBUNG

IMAGERIE ULTRASONORE ANÉCHOÏQUE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **07.10.2009 US 249388 P**

(43) Date of publication of application:
**15.08.2012 Bulletin 2012/33**

(73) Proprietor: **Koninklijke Philips Electronics N.V.
5621 BA Eindhoven (NL)**

(72) Inventors:
• **BAE, Unmin**
**NL-5656 AE Eindhoven (NL)**
• **RICHMOND, Donna, Lynn**
**NL-5656 AE Eindhoven (NL)**
• **CHEREPAKHIN, Alexey, Viktorovich**
**NL-5656 AE Eindhoven (NL)**
• **YANG, Zhaowen**
**NL-5656 AE Eindhoven (NL)**

• **SHAMDASANI, Vijay**
**NL-5656 AE Eindhoven (NL)**

(74) Representative: **Damen, Daniel Martijn
Philips
Intellectual Property & Standards
P.O. Box 220
5600 AE Eindhoven (NL)**

(56) References cited:
**WO-A1-2007/110375      US-A- 6 117 080
US-A1- 2009 141 957**

• **BOOI ET AL: "Characterization of Cysts Using
Differential Correlation Coefficient Values from
Two Dimensional Breast Elastography:
Preliminary Study", ULTRASOUND IN MEDICINE
AND BIOLOGY, NEW YORK, NY, US, vol. 34, no.
1, 1 January 2008 (2008-01-01), pages 12-21,
XP022411262, ISSN: 0301-5629, DOI: DOI:
10.1016/J.ULTRASMEDBIO.2007.07.003**

**Description**

This invention relates to medical diagnostic ultrasound systems and method. In particular, the invention pertains to method for producing an ultrasonic image of a region of interest within the body which may contain an anechoic or hypoechoic area. The invention notably applies in breast cyst and vascular plaque imaging.

BACKGROUND OF THE INVENTION

Breast cysts can pose a diagnostic dilemma. For example, simple cysts with hemorrhagic content may have internal echoes and appear suspicious on conventional ultrasound since malignant solid lesions are often hypoechoic.

Such kind of dilemma can also occur when trying to determine the extent of vascular plaques. This can be challenging since many vulnerable plaques that contain lipid may appear hypoechoic and similar to the background blood region inside the vessel.

Accordingly, better visualizing hypoechoic areas on ultrasound and better differentiating between such solid and fluid regions is of great clinical importance for diagnosis and management of cancers and vascular pathologies.

A method aiming at providing such improvement is known from the patent disclosure US6117080.

This document aims at improving the rendering of an image comprising an hypoechoic area. More precisely, this method comprises the step of using an opacity function to improve the B-mode or color Doppler imaging data by rendering any hypoechoic area with greater opacity than normal tissue.

While this method provides slight improvements over its prior art, it may still be not sufficient.

SUMMARY OF THE INVENTION

Thus an object of the present invention is to provide a method and system which further improves visualization of hypoechoic areas on ultrasound and better differentiates between such solid and fluid regions.

In particular, there may be a need to improve the contrast of anechoic or of hypoechoic areas which are imaged with ultrasound, particularly over echoic areas.

In this effect, the present invention aims at characterizing hypoechoic areas into solid and fluid areas, using temporal consistency of ultrasound signals.

In particular, an object of the invention is to provide a method for producing an ultrasonic image of a region of interest within the body, comprising the steps of:

•    providing a first and a second set of ultrasound data, said two sets comprising information of the same region of interest at two different instants of time respectively,

•    determining from the first and second data sets, a temporal consistency value of at least an area of the region of interest, the temporal consistency value indicating a degree of content similarity of the first and second set of ultrasound data, and

•    producing an image indicating this area as being hypoechoic or anechoic in accordance with said temporal consistency value.

Thus, according to the invention a degree, or said differently a level, of hypoecho can be estimated by observing the consistency between two ultrasound sets of data corresponding to two different instants of time of acquisition.

As will be understood by a skilled person in the art, the invention could also be defined with respect of inconsistency. In fact, what is meant in substance by consistency or inconsistency is the degree of similarity or non-similarity of at least certain signal pattern (or characteristic), between two such sets of ultrasound data.

In particular, two sets having a large variability of signal patterns may lack consistency : they lack content similarity.

For example, if an object e.g. a cyst is present in a first data set and absent in a second data set, the temporal consistency of the two sets may be low or, conversely their inconsistency may be high.

Therefore, according to the invention, temporal consistency can be seen as how much similar is the content of two sets or two frames.

L et assume two data sets , e.g. two frames, which are intended to image the same region of interest at two different instants (thus the position of ultrasound transducer may typically be fixed). Then, the major differences (would there be any) between the two frames in terms of content or pattern would belong to noisy areas. Typically, such areas can be those which are lacking tissue scatterers and interfaces that return consistent echoes. And advantageously these noisy areas are typically cystic and blood areas without solid tissues. Thus, examining the similarity of two frames can reveal that an region of interest is an anechoic region below noise level.

By carrying out the method of the invention, it is possible to better characterize how much an area of the region of interest is hypoechoic and thus better differentiate hypoechoic areas with respect to each other or with respect to echoic areas.

Some preferred, although not exclusive, aspects of this method are the following:

-    The data sets may have been acquired and stored in memory at an earlier moment in order to carry out the method of the invention later in time. In this case, the step of providing these data may comprise a step of retrieving them from the memory.

-    The method may comprise the steps of transmitting ultrasound signals into the region of interest, receiving echoes from the ultrasound signals, beamforming the ultrasound echoes to produce radio frequency (RF) data and providing said first and second data sets from said radio frequency data; instead it is also proposed to demodulate the RF data into in-phase and quadrature (IQ) data, and provide said first and second data sets from said in-phase and quadrature data.

Thus the method of the invention allows to work upstream in the flow of data generation, and in particular well before the generation of image data such as B-mode, color Doppler, strain or tissue harmonics data. An advantage of working upstream with radiofrequency RF and IQ data is that the temporal consistency can be determined from both amplitude and phase information of ultrasound echoes returned from areas of the region of interest, e.g. from tissues. On the contrary, working downstream on, for example, B-mode data can only provide amplitude information.

- The method may further comprise the step of amplifying or attenuating the temporal consistency value by means of a transfer function. This can enable to better control the emphasis, e.g the contrast, of an hypoechoic area over echoic ones.
- The method may further comprise the step of a converting the temporal consistency value into a color value which designates a predetermined echoic level ranging from anechoic to echoic. Thus a practitioner can obtain an efficient overview of the hypoechoic areas in the region of interest.
- The temporal consistency value itself or an enhanced value derived from the latter may be displayed.
- The temporal consistency can involve the computation of a temporal variance or of a correlation coefficient.
- The image produced by the method can be overlaid on a B-mode image.

According to another object of this invention, it is proposed an ultrasound device for imaging a region of interest within the body, comprising:

- an ultrasound transducer, and a beamformer configured to provide a first and a second set of ultrasound data, said two sets comprising information of the same region of interest at two different instants of time respectively,
- a temporal consistency estimator coupled to the beamformer and configured to determine from the first and second data sets, a temporal consistency value of at least an area of the region of interest, the temporal consistency value indicating a degree of content similarity of the first and second set of ultrasound data, and-,
- an image processor coupled to the temporal consistency estimator and configured to produce an image indicating this area as being hypoechoic or anechoic in accordance with said temporal consistency value.

According to an aspect of the invention, this ultrasound device further comprises a display for displaying the image, said display being coupled to the image processor, and a switch enabling the device to operate in an anechoic mode in which the displayed image highlights an area determined to be anechoic and hypoechoic, over an area determined to be echoic.

BRIEF DESCRIPTION OF THE DRAWINGS

Other aspects, objects and advantages of this invention will become more apparent upon reading the following detailed description of a preferred embodiment of this invention, given as a non-limiting example and made with reference to the attached drawings, in which:

FIGURE 1 illustrates with functional blocks of an ultrasonic diagnostic imaging system constructed in accordance with a principle of the present invention.
FIGURE 2 illustrates the steps of a method of the invention for producing anechoic images.
FIGURE 3 illustrates a B-mode image of a tissue next to an anechoic image of the same tissue produced according to the invention.
FIGURE 4 illustrates a B-mode image of a tissue with increased gain settings, next to an anechoic image of the same tissue produced according to the invention.

DESCRIPTION OF EMBODIMENTS OF THE INVENTION

Preliminarily, it is to be noted that according to the invention the wording "area" refers to a location in the region of interest which is to be acquired or which has been acquired but not yet converted as image data. Typically, an area may refer to said location in the real body and it should be distinguished from the corresponding location in an image. The corresponding location of the area in the image world may rather be defined by referring to pixel(s).

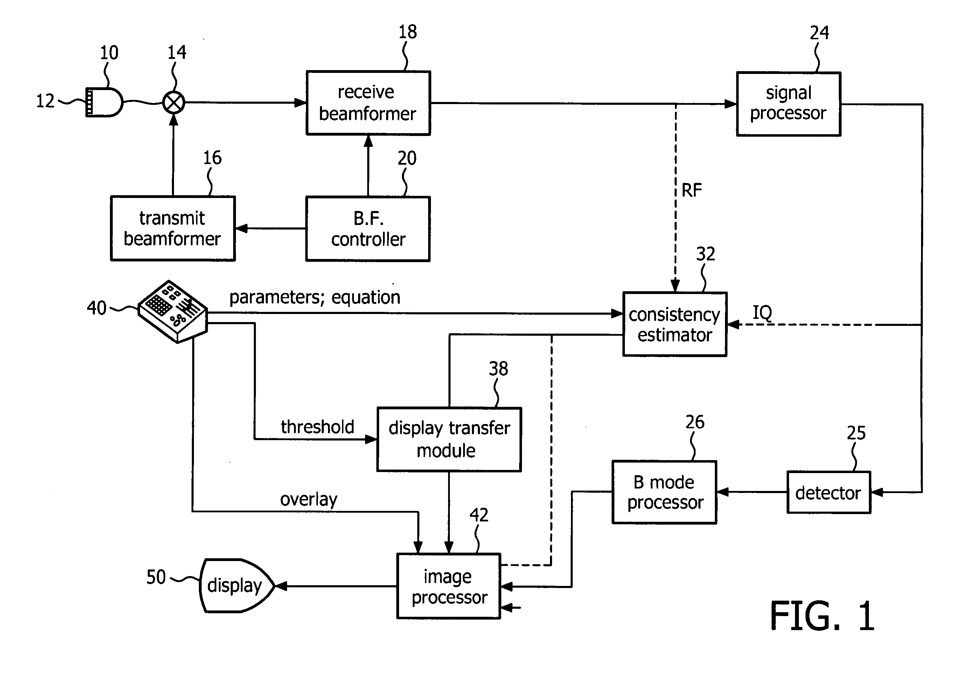

Referring to figure 1, an ultrasound imaging device constructed in accordance with an embodiment of the invention is shown. This device mostly comprises functional blocks which are known in the art and which, therefore, will not be described in detail here, considering that a skilled person in the art will be able to recognize which obvious variations can be made.

The device of the invention comprises an ultrasound probe 10. This probe comprises an array transducer 12 for transmitting ultrasound signals to and receiving echo signals from a region of interest in a body.

The array transducer can be a one-dimensional array of transducer elements or a two-dimensional array of transducer elements for scanning a two dimensional image field or a three dimensional image field in the body.

The elements of the array transducer are driven by a transmit beamformer 16 which, as is known in the art, can typically control the steering, focusing and penetration of transmitted beams from the array.

A receive beamformer 18 receives the echo data corresponding to the echo signals from the transducer elements and combines these data to form coherent echo data from points in the image field.

As is known in the art, the transmit and receive beamformers can be coupled to the transducer array elements by transmit/receive switches 14 which protect sensitive receive circuitry during transmission.

A beamformer controller 20 synchronizes and controls the operation of the beamformers.

A signal processor 24 demodulates the radiofrequency (RF) data coming from the receive beamformer into in-phase and quadrature (I and Q) ultrasound data using a quadrature bandpass (QBP) and performs further processing known in the art, such as gain adjustment for example. According to this preferred embodiment, the processed ultrasound data are provided to a detector 25 which performs amplitude and/or phase detection of the ultrasound data using the equation $(I^2 + Q^2)^{1/2}$. These data are then provided to a B-mode processor 26 known in the art.

In the preferred embodiment, a temporal consistency estimator 32 is coupled to the receive beamformer or to the signal processor (the two dashed lines corresponds to these two options). The consistency estimator determines temporal consistency of the radiofrequency RF or in-phase and quadrature IQ ultrasound data. In other words, as explained above, the temporal consistency estimator determines a degree of content similarity (or non-similarity when referring to non-consistency) in radiofrequency or IQ ultrasound data acquired at two different instant of times.

In this effect, the consistency estimator 32 may comprise a processor, DSP, FGA, ASIC, or any such type of computing component, and a memory for storing an equation defining a mathematic form of the temporal consistency estimation.

In this regard, the invention envisions the use of many forms, such as, but not limited to, a temporal variance (V). As an example, such variance (V) can be expressed by:

$$R0 = A^2 + B^2, \ R_1 \ = \ A \ \cdot \ B^*$$

$$V \ = \ R_0 \ / \ \sqrt{R_1^{\ 2}}$$

Where A and B are two ultrasound data sets from the same tissue acquired at two different instant of times, and B* indicates the conjugate of B.

As another form of temporal consistency, it is also possible to use a correlation function to generate a correlation coefficient (CC). An example of such Correlation coefficient can be:

$$CC \ = \ \sqrt{\frac{(A \ \cdot \ B^*)^2}{A^2 \ \cdot \ B^2}}$$

The temporal consistency estimator 32 thus outputs one or more temporal consistency values for one or more area in the region of interest from the two set of ultrasound data.

For example, if a signal pattern representing an object is detected in the same area in the two data sets, a high or low inconsistency value will be output for this area by the temporal consistency estimator depending on whether the temporal variance or Correlation Coefficient is computed, respectively.

As will be seen hereafter, in a particular embodiment of the invention the temporal consistency estimator 32 may determine a single temporal consistency value for a single area.

In the preferred embodiment of the invention, the temporal consistency estimator 32 may apply such determination for more areas, thereby determining a plurality of temporal consistency values. Each area of the region of interest may be concerned.

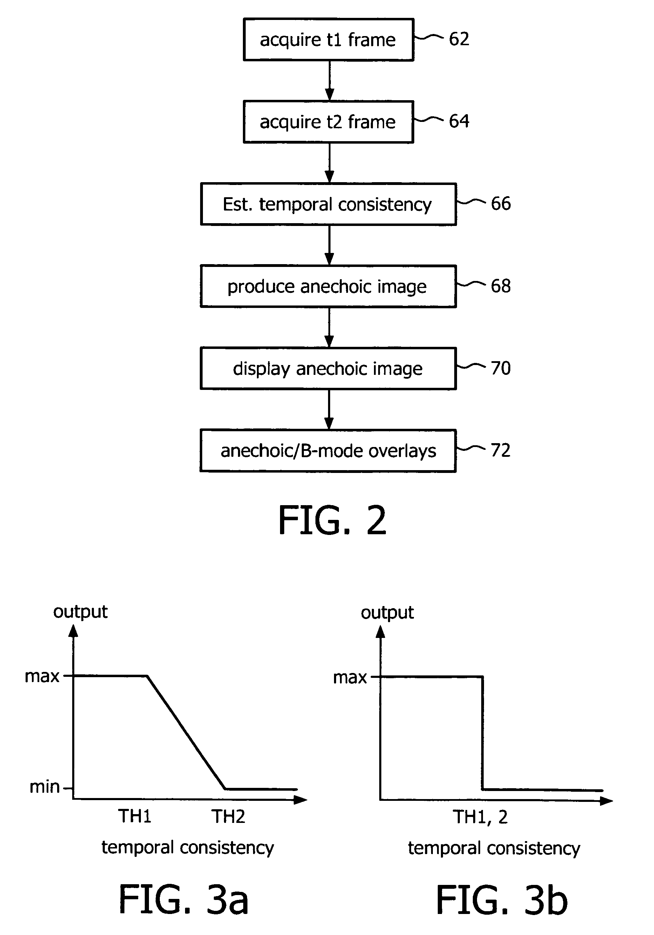

In the preferred embodiment, the ultrasound device further comprises a Display transfer module 38 which is notably able to convert a temporal consistency value to a pixel value in the image world, e.g. a 8-bit data for display. The Display Transfer module has also a function of dynamically controlling amplitude of the temporal consistency value. For example, as will be described in relation to figures 3, this dynamic control can be configured to boost a certain range of consistency values in order to emphasize this range over other consistency values.

The display transfer module 38 is coupled to an image processor 42.

This processor 42 is also coupled to the B-mode processor 26 and can receive B-mode data therefrom.

The image processor 42 processes the image data, e.g., by scan conversion to a desired image format, by image overlay, etc., and produces an image such an an anechoic image for display on a display 50.

The ultrasound device further comprises a control panel 40 which can be used as a user interface. As will be described hereafter, the practitioner can manipulate controls such as knobs or switches in order to control some parameters used in the method of the invention.

Turning now to FIGURE 2, a method according to the preferred embodiment of the invention is illustrated.

At a step 62 a first set of ultrasound data is acquired at a reference time $t_1$. At as step 64 a second set of ultrasound data is acquired at a reference time $t_2$. Note that according to this preferred embodiment, a set of data is such that the device can create from this set an image frame of the region of interest. The ultrasound data may preferably be RF or IQ data, as described above.

The two ultrasound data sets corresponding thus to two frames are used at a step 66 to determine temporal consistency in either two dimensions or three dimensions, depending upon the nature of the data (e.g. 2D or 3D data set).

For the purpose of temporal consistency determination, the variance or correlation equation described above can be used, although the skilled person in the art will understand that other forms, e. g. of correlation, can apply.

Still according to the preferred embodiment, the determination of temporal consistency is performed in all possible areas of the region of interest and for example a temporal consistency map image including all the corresponding temporal consistency values is created. A temporal consistency table could also be created instead.

At a step 68 a display transfer function is applied to the temporal consistency map image. Referring to figures 3a,b, the display transfer function is able to convert a temporal consistency value to an enhanced value, called output in these figures.

According to figure 3a, a first example of display transfer function is shown. As can be seen, as long as a temporal consistency value is below a first threshold TH1, the output is set to a maximum predetermined value MAX. As the temporal consistency value increases from the first threshold TH1 to a second higher threshold TH2, the output linearly decreases from the MAX value to a minimum predetermined value MIN. Finally, as long as the temporal consistency value is above the threshold TH2, the output is set to the MIN value.

The thresholds TH1 and TH2 may be used to divide regions above noise level (echoic) and below noise level (anechoic).

As can be understood, a result of applying such a Display Transfer Function to a temporal consistency value is to further emphasis hypoechoic areas from echoic ones.

Of course, in other embodiments where such boosting is not desired the Display transfer module may not be needed.

A second example of display transfer function is shown in figure 3b. Compared to the first example of figure 3a, the second example uses a single threshold (TH1=TH2).

The skilled person in the art will recognize that other types of display transfer function can be used in the method of the invention. By way of example, it is also possible to use a Display Transfer Function which applies log compression prior to applying piecewise linear compression.

According to the preferred embodiment of the invention, the output of the display transfer function may be color coded. This can either be performed by the Display Transfer module or by the Image processor.

Thus, for each area in the region of interest, a corresponding temporal consistency value is determined and then color coded.

An anechoic image can then be produced and displayed at a step 70.

At a step 72 the user may optionally use the control panel for different purposes such as requesting the ultrasound device to overlay the anechoic image produced by the invention on a B-mode image. The user may also desire to better delineate hypoechoic or anechoic areas by adjusting display rendering thresholds, by choosing the display transfer function in a displayed list or by adjusting its parameters (e.g. TH1, TH2).

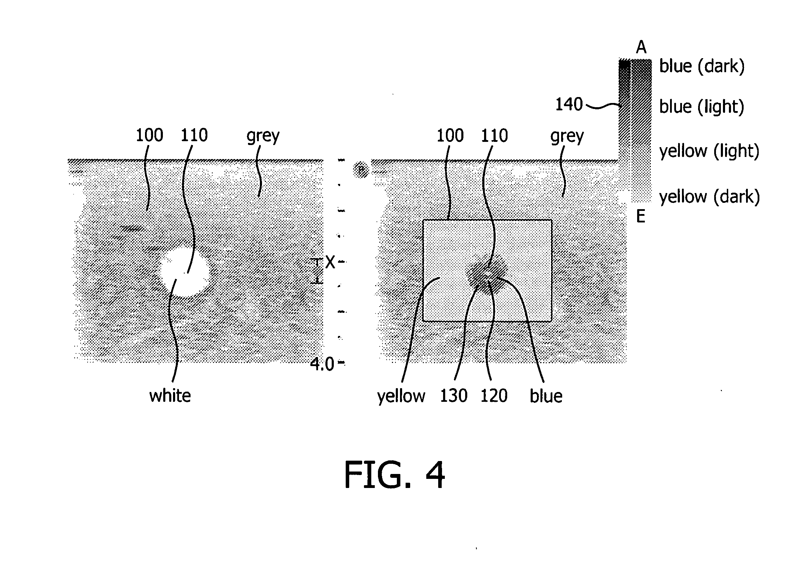

Figure 4 shows side by side two images of a region of interest 100 when using a standard 2D B-mode and the anechoic imaging mode according to the invention,, respectively. In the latter, the anechoic image is overlaid on the B-mode image.

In the anechoic imaging mode of the invention, the degree of hypoecho has been estimated using the frame-to-frame consistency estimation according to the invention. Further, the anechoic image has been displayed using a colormap where A and E in a displayed colorbar 140 indicate limits in a range lying between anechoic and echoic, respectively. In other words, the colorbar 140 allows to efficiently differentiate between an anechoic, hypoechoic and echoic area. The colors used in the invention can either lie in a grey level or RGB range.

As can be seen, the region of interest 100 comprises a cyst 110 in a breast phantom.

In the B-mode image on the left hand side, the cyst appears as a white bright round spot 110 located at the center of the region of interest. The region around the spot 110 is mostly colored in grey (different grey levels).

It is difficult, if not impossible, to identify the internal structure of this cyst 110.

On the contrary, in the anechoic image produced by the invention at the right hand side, the contrast between the spot 110 and the region of interest 100 around it is greater than in the B-mode image.

In particular, the region of interest 100 around the spot 110 is mainly echoic and appears in this example in yellow. While the spot 110 corresponding to the cyst, being mainly anechoic or hypechoic, appears mostly in blue.

Further, it can be seen that the internal structure of the cyst 110 appears now more clearly in the anechoic image of the invention. The color (bule here) assigned to the cyst 110 appears less uniform than that in the B-mode image (completely white).

For example, the cyst 110 shows internally a limited number of echoic areas 120 (yellow) and a great number of hypoechoic or anechoic areas 130 (blue). More precisely, it is possible to indentify small debris inside the cyst, such as the two small echoic debris in yellow at the center (reference 120 points on one of them).

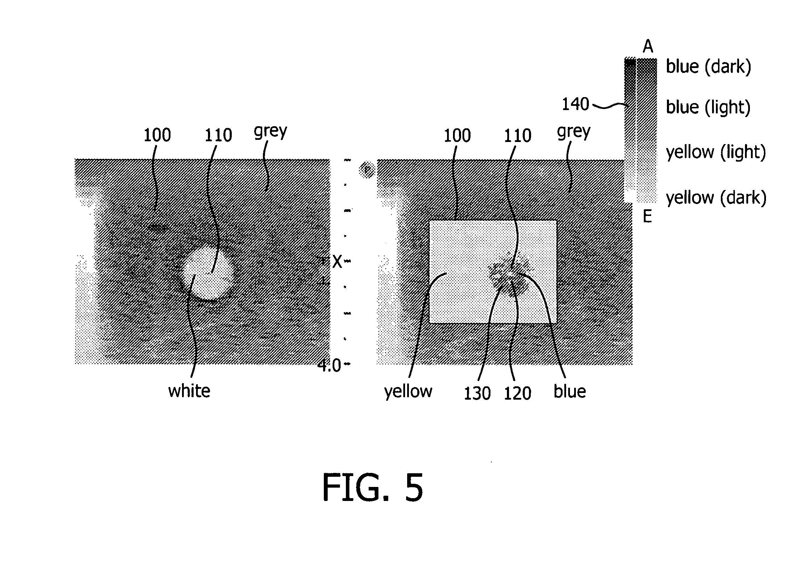

Turning now to figure 5, the same region of interest than that of figure 4 is shown, but the B-mode gain has been substantially increased.

By comparing the B-mode image (left hand side) with the anechoic image produced according to the invention (right hand side), it can be seen that increasing the B-mode gain as was known is the art did not really improve the differentiation, e.g. contrast, between hypoechoic and echoic areas in the region to interest. Indeed, solid debris slightly tend to be distinguishable in this B-mode image, but a practitioner may not still be able to dress a diagnosis conclusion in confidence.

On the contrary, the same solid debris are shown in the anechoic image of the invention and appear very clearly. The practitioner may dress a conclusion in confidence in this case.

Of course, the invention is not limited to the embodiments described above.

In particular, in other embodiments, a temporal consistency value associated to a specific area in the region of interest may be directly displayed in the anechoic image as a numeric value. This numeric value may be displayed on or near a pixel corresponding to the location of the area. For example, a correlation coefficient ranging from 0 to 1 can be computed to represent a temporal consistency value. A Display transfer function with a single threshold of 0.8 may be used to suggest that a correlation coefficient above 0.8 means echoic and otherwise hypoechoic or anechoic depending on how far below the value stands from this threshold.

Further, instead of displaying the temporal consistency value itself, this value may be converted to another numeric value which is more comprehensible by the practitioner. For example the converted value may lead more easily to a clinical indication, e.g., the temporal consistency value is scaled to fit between 0% and 100% and reported to users.

The practitioner may also be able to request the display in the anechoic image of the numeric value of a specific area (be it the temporal consistency value itself or a conversion of it as notably described above) upon his input about which pixel is concerned.

By way of example, the practitioner may be able to click on a pixel associated to the debris 120 in figure 4.

Then the numerical value (e.g. temporal consistency value) determined for the corresponding area may be displayed in the anechoic image, for example close to the corresponding pixel in the image.

In other embodiments of the invention, an area of the region of interest may not correspond to one pixel only in the image. It may rather correspond to groups of pixels. In this case, a single temporal consistency value may be determined per group of pixels.

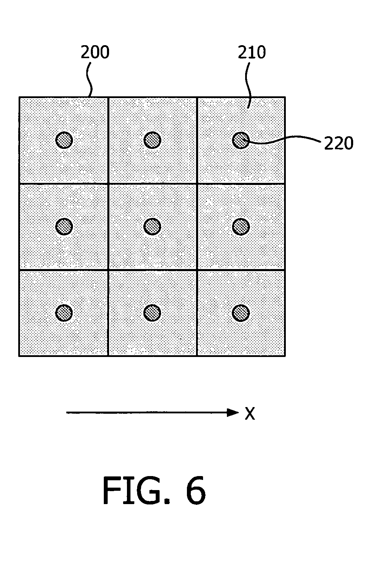

By way of example, figure 6 schematically illustrates a region of interest 200 divided into 9 by 9 similar areas (in figure 6, numeral 210 refers to one of the areas).

The image produced by the method of the invention can include N x M pixels (e.g. 100 x 100 pixels).

Each of the nine areas is approximately represented in this image by a small-size block of pixels to which a same temporal consistency value is associated.

As another example, the temporal consistency value may be determined and assigned to the center of each area (in figure 6, numeral 220 refers to the center of area 210).

In this case, the method of the invention may determine nine temporal consistency values for the nine areas (corresponding pixels blocks) shown as a non limitative example in figure 6.

Also, the method can further determine nine additional temporal consistency values for nine additional centers of nine other blocks of the region of interest. For example by translating the nine blocks in figure 6 according to one pixel distance in the X direction, nine additional temporal consistency values can be determined.

This process can be repeated until a minimum number of center area or correspondingly center pixel in the image have an associated temporal consistency value.

Of course, other transformation than the translation described herewith can be used. In this regard it can be noted that some or all blocks can overlap each other.

In any case, averaging multiple temporal consistency estimates to derive one temporal consistency value for a block or computing a temporal consistency value on areas which correspond to multiple adjacent pixels instead of a single pixels can reduce estimation error. This applies in particular when the patterns in the region of interest must be defined with multiple pixels.

While the invention has been described in combination with B-mode imaging, it may not be limited thereto.

In particular, the method of the invention can be combined as well with Doppler, Tissue Harmonics, and elastography imaging.

Besides, while it has been described above that the method according to the invention can determine temporal consistency values based on RF and IQ ultrasound data, it can also work on the basis of B-mode data generated by the B-mode processor, Doppler data generated by a Doppler processor, Tissue Harmonics data by a Tissue Harmonics processor, or elastography data generated by an strain processor. In this respect, a skilled person in the art will be able to adapt the device and the method of the invention without inventive skills.

As explained above, an advantage of working with RF and IQ data for determining the temporal consistency values is that amplitude and phase information are available and preserved at this point of the acquisition flow. Working on e.g. B-mode data may reduce the sensitivity of highlighting anechoic regions compared to RF and IQ data.

## Claims

1.  A method for producing an ultrasonic image of a region of interest (100, 200) within the body, comprising the steps of:

    • providing a first and a second set of ultrasound data, said two sets comprising information of the same region of interest (100, 200) at two different instants of time respectively,
    • determining from the first and second data sets, a temporal consistency value of at least an area of the region of interest (100, 200), the temporal consistency value indicating a degree of content similarity of the first and second set of ultrasound data, and
    • producing an image indicating this area as being hypoechoic or anechoic in accordance with said temporal consistency value.

2.  A method according to claim 1, comprising the steps of transmitting ultrasound signals into the region of interest (100, 200), receiving echoes from the ultrasound signals, beamforming the ultrasound echoes to produce radio frequency data and providing said first and second data sets from said radio frequency data.

3.  A method according to claim 1, comprising the steps of transmitting ultrasound signals into the region of interest (100, 200), receiving echoes from the ultrasound signals, beamforming the ultrasound echoes to produce radio frequency data, demodulating the radio frequency data into in-phase and quadrature data, and providing said first and second data sets from said in-phase and quadrature data.

4.  A method according to claim 1, comprising carrying the step of determining a temporal consistency value for each of a plurality of areas in the region of interest (100, 200) and producing an image of the region of interest (100, 200) indicating these areas as being hypoechoic and/or anechoic in accordance with their respective temporal consistency value.

5.  A method according to claim 1, comprising the step of amplifying or attenuating the temporal consistency value by means of a transfer function.

6.  A method according to claim 1, comprising the step of converting the temporal consistency value into a color value which designates a predetermined echoic level ranging from anechoic to echoic.

7.  A method according to claim 1, wherein indicating the area as being anechoic or hypoechoic comprises displaying the temporal consistency value in the image, or converting the temporal consistency value into a numeric value designating a predetermined echoic level ranging from anechoic to echoic and displaying this numeric value in the image.

8.  A method according to claim 7, comprising the step of displaying the numeric value upon a click action in a pixel of the image corresponding to said area.

9.  A method according to claim 1, comprising the step of emphasizing the rendering of a pixel corresponding to the area in the image as the temporal consistency value decreases, such that the image highlights said area when it is determined to be anechoic and hypoechoic, compared to echoic.

10. A method according to claim 1, wherein determining a temporal consistency value comprises the step of determining a temporal variance.

11. A method according to claim 1, wherein determining a temporal consistency value comprises the step of determining a correlation coefficient.

12. A method according to claim 1, further comprising the step of overlaying the image on a B-mode image including the region of interest (100, 200).

13. An ultrasound device for imaging a region of interest (100, 200) within the body, comprising:

    • an ultrasound transducer (12), and a beamformer (18) configured to provide a first and a second set of ultrasound data, said two sets comprising information of the same region of interest (100, 200) at two different instants of time respectively,
    • a temporal consistency estimator (32) coupled to the beamformer (18) and configured to determine from the first and second data sets, a temporal consistency value of at least an area of the region of interest (100, 200), the temporal consistency value indicating a degree of content similarity of the first and second set of ultrasound data, and
    • an image processor (42) coupled to the temporal consistency estimator configured to produce an image indicating this area as being hypoechoic or anechoic in accordance with said temporal consistency value.

14. An ultrasound device according to claim 13, further comprising a display (50) for displaying the image, said display being coupled to the image processor (42), and a switch enabling the device to operate in an anechoic mode in which the displayed image highlights an area determined to be anechoic and hypoechoic, over an area determined to be echoic.

**Patentansprüche**

1.  Verfahren zum Erzeugen eines Ultraschallbildes einer interessierenden Region (100, 200) innerhalb des Körpers, wobei das Verfahren die folgenden Schritte umfasst:

    - Schaffen eines ersten und eines zweiten Satzes von Ultraschalldaten, wobei die genannten beiden Sätze Informationen über die gleiche interessierende Region (100, 200) zu zwei jeweils verschiedenen Zeitpunkten umfassen,
    - Ermitteln eines zeitlichen Konsistenzwertes von mindestens einem Bereich der interessierenden Region (100, 200) anhand des ersten und des zweiten Datensatzes, wobei der zeitliche Konsistenzwert einen Grad der Inhaltsähnlichkeit des ersten und des zweiten Satzes von Ultraschalldaten angibt, und
    - Erzeugen eines Bildes, das diesen Bereich entsprechend dem genannten zeitlichen Konsistenzwert als echoarm oder echofrei angibt.

2.  Verfahren nach Anspruch 1, mit den Schritten des Aussendens von Ultraschallsignalen in die interessierende Region (100, 200), des Empfangens von Echos von den Ultraschallsignalen, des Strahlformens der Ultraschallechos zum Erzeugen von Hochfrequenzdaten und des Schaffens des genannten ersten und des genannten zweiten Datensatzes anhand der genannten Hochfrequenzdaten.

3.  Verfahren nach Anspruch 1, mit den Schritten des Aussendens von Ultraschallsignalen in die interessierende Region (100, 200), des Empfangens von Echos von den Ultraschallsignalen, des Strahlformens der Ultraschallechos zum Erzeugen von Hochfrequenzdaten, des Demodulierens der Hochfrequenzdaten in In-Phase- und Quadratur-Daten und des Schaffens des genannten ersten und des genannten zweiten Datensatzes anhand der genannten In-Phase- und Quadratur-Daten.

4.  Verfahren nach Anspruch 1, mit dem Schritt des Ermittelns eines zeitlichen Konsistenzwertes für jeden einer Vielzahl von Bereichen der interessierenden Region (100, 200) und des Erzeugens eines Bildes der interessierenden Region (100, 200), welches diese Bereiche entsprechend ihrem jeweiligen zeitlichen Konsistenzwert als echoarm und/oder echofrei angibt.

5.  Verfahren nach Anspruch 1, mit dem Schritt des Verstärkens oder Abschwächens des zeitlichen Konsistenzwertes mithilfe einer Transferfunktion.

6.  Verfahren nach Anspruch 1, mit dem Schritt des Umwandelns des zeitlichen Konsistenzwertes in einen Farbwert, der einen vorgegebenen Echopegel benennt, welcher von echofrei bis echogen reicht.

7.  Verfahren nach Anspruch 1, wobei das Angeben des Bereichs als echofrei oder echoarm das Anzeigen des zeitlichen Konsistenzwertes in dem Bild oder das Umwandeln des zeitlichen Konsistenzwertes in einen numerischen Wert, der einen vorgegebenen Echopegel benennt, welcher von echofrei bis echogen reicht, und das Anzeigen dieses numerischen Wertes in dem Bild umfasst.

8.  Verfahren nach Anspruch 7, mit dem Schritt des Anzeigens des numerischen Wertes in Reaktion auf eine Klickaktion in einem Pixel des Bildes, das dem genannten Bereich entspricht.

9.  Verfahren nach Anspruch 1, mit dem Schritt des Betonens der Darstellung eines Pixels, das dem Bereich in dem Bild entspricht, wenn der zeitliche Konsistenzwert abnimmt, so dass das Bild den genannten Bereich hervorhebt, wenn er im Vergleich zu echogen als echofrei und echoarm ermittelt wird.

10. Verfahren nach Anspruch 1, wobei das Ermitteln eines zeitlichen Konsistenzwertes den Schritt des Ermittelns einer zeitlichen Varianz umfasst.

11. Verfahren nach Anspruch 1, wobei das Ermitteln eines zeitlichen Konsistenzwertes den Schritt des Ermittelns eines Korrelationseffizienten umfasst.

12. Verfahren nach Anspruch 1, das weiterhin den Schritt umfasst, das Bild einem B-Mode-Bild zu überlagern, welches die interessierende Region (100, 200) enthält.

13. Ultraschallvorrichtung zur Bildgebung einer interessierenden Region (100, 200) innerhalb des Körpers, wobei die Ultraschallvorrichtung Folgendes umfasst:

    - einen Ultraschallwandler (12) und einen Strahlformer (18), die konfiguriert sind, um einen ersten und einen zweiten Satz von Ultraschalldaten zu schaffen, wobei die genannten beiden Sätze Informationen über die gleiche interessierende Region (100, 200) zu zwei jeweils verschiedenen Zeitpunkten umfassen,
    - eine Einheit (32) zum Schätzen der zeitlichen Konsistenz, die mit dem Strahlformer (18) gekoppelt ist und konfiguriert ist, um anhand des ersten und des zweiten Datensatzes einen zeitlichen Konsistenzwert von mindestens einem Bereich der interessierenden Region (100, 200) zu ermitteln, wobei der zeitliche Konsistenzwert einen Grad der Inhaltsähnlichkeit des ersten und des zweiten Satzes von Ultraschalldaten angibt, und

- einen Bildprozessor (42), der mit der Einheit zum Schätzen der zeitlichen Konsistenz gekoppelt ist und konfiguriert ist, um ein Bild zu erzeugen, das diesen Bereich entsprechend dem genannten zeitlichen Konsistenzwert als echoarm oder echofrei angibt.

**14.** Ultraschallvorrichtung nach Anspruch 13, weiterhin mit einer Anzeigeeinheit (50) zum Anzeigen des Bildes, wobei die genannte Anzeigeeinheit mit dem Bildprozessor (42) gekoppelt ist, und mit einem Schalter, der es der Vorrichtung ermöglicht, in einem echofreien Modus zu arbeiten, in dem das angezeigte Bild einen als echofrei und echoarm ermittelten Bereich gegenüber einem als echogen ermitteltem Bereich hervorhebt.

## Revendications

**1.** Procédé pour la production d'une image ultrasonore d'une région d'intérêt (100, 200) à l'intérieur du corps, comprenant les étapes suivantes :

- la fourniture d'un premier et d'un second ensembles de données ultrasonores, lesdits deux ensembles comprenant des informations de la même région d'intérêt (100, 200) à deux instants différents, respectivement,
- la détermination, à partir des premier et second ensembles, d'une valeur de cohérence temporelle d'au moins une zone de la région d'intérêt (100, 200), la valeur de cohérence temporelle indiquant un degré de similarité de contenu des premier et second ensembles de données ultrasonores, et
- la production d'une image indiquant cette zone comme étant hypo-échoïque ou anéchoïque selon ladite valeur de cohérence temporelle.

**2.** Procédé selon la revendication 1, comprenant les étapes de transmission de signaux ultrasonores dans la région d'intérêt (100, 200), la réception d'échos des signaux ultrasonores, la mise en forme de faisceau des échos ultrasonores pour produire des données de fréquence radio et la fourniture desdites données de fréquence radio auxdits premier et second ensembles de données.

**3.** Procédé selon la revendication 1 comprenant les étapes de transmission de signaux ultrasonores dans la région d'intérêt (100, 200), la réception d'échos des signaux ultrasonores, la mise en forme de faisceau des échos ultrasonores pour produire des données de fréquence radio, la démodulation des données de fréquence radio en accord interaural de phase et en données de quadrature, et la fourniture desdites données en accord interaural de phase et de quadrature auxdits premier et second ensembles de données.

**4.** Procédé selon la revendication 1, comprenant la mise en oeuvre de l'étape de détermination d'une valeur de cohérence temporelle pour chacune de la pluralité de zones dans la région d'intérêt (100, 200) et la production d'une image de la région d'intérêt (100, 200) indiquant ces zones comme étant hypo-échoïques et/ou anéchoïques selon ladite valeur de cohérence temporelle.

**5.** Procédé selon la revendication 1, comprenant l'étape d'amplification ou d'atténuation de la valeur de cohérence temporelle au moyen d'une fonction de transfert.

**6.** Procédé selon la revendication 1, comprenant l'étape de conversion de la valeur de cohérence temporelle en une valeur chromatique qui désigne un niveau échoïque prédéterminé allant d'anéchoïque à échoïque.

**7.** Procédé selon la revendication 1, dans lequel l'indication de la zone comme étant anéchoïque ou hyper-échoïque comprend l'affichage de la valeur de cohérence temporelle dans l'image, ou la conversion de la valeur de cohérence temporelle en une valeur numérique désignant un niveau échoïque prédéterminé allant d'anéchoïque à échoïque et affichant cette valeur numérique dans l'image.

**8.** Procédé selon la revendication 7, comprenant l'étape d'affichage de la valeur numérique, sur un clic, dans un pixel de l'image correspondant à ladite zone.

**9.** Procédé selon la revendication 1, comprenant l'étape d'accentuation du rendu d'un pixel correspondant à la zone dans l'image alors que la valeur de cohérence temporelle diminue, de sorte que l'image fasse ressortir ladite zone lorsqu'elle est déterminée comme étant anéchoïque et hypo-échoïque, en comparaison avec échoïque.

**10.** Procédé, selon la revendication 1, dans lequel la détermination d'une valeur de cohérence temporelle comprend l'étape de détermination d'une variance temporelle.

**11.** Procédé selon la revendication 1, dans lequel la détermination d'une valeur de cohérence temporelle comprend l'étape de détermination d'un coefficient de corrélation.

**12.** Procédé selon la revendication 1, comprenant en outre l'étape de recouvrement par l'image d'une image en mode B incluant la région d'intérêt (100, 200).

**13.** Appareil à ultrasons destiné à l'imagerie d'une région d'intérêt (100, 200) à l'intérieur du corps, comprenant :

- un transducteur ultrasonore (12), et un dispositif de mise en forme de faisceau (18) configuré pour fournir les premier et second ensembles de données, lesdits deux ensembles comprenant des informations de la même région d'intérêt (100, 200) à deux instants différents, respectivement.
- un estimateur de cohérence temporelle (32) couplé au dispositif de mise en forme de faisceau (18) et configuré pour déterminer, sur la base des premier et second ensembles de données, une valeur de cohérence temporelle d'au moins une zone de la région d'intérêt (100, 200), la valeur de cohérence temporelle indiquant un degré de similarité de contenu des premier et second ensembles de données, et
- un processeur d'image (42) couplé à l'estimateur de cohérence temporelle configuré pour produire une image indiquant cette zone comme étant hypo-échoïque ou anéchoïque en fonction de ladite valeur de cohérence temporelle.

**14.** Appareil à ultrasons selon la revendication 13, comprenant en outre un afficheur (50) pour l'affichage de l'image, ledit afficheur étant couplé au processeur d'image (42), et un interrupteur permettant à l'appareil de fonctionner dans un mode anéchoïque dans lequel l'image affichée fait ressortir une zone déterminée comme étant anéchoïque et hypo-échoïque, sur une zone déterminée comme étant échoïque.

FIG. 1

acquire t1 frame — 62

acquire t2 frame — 64

Est. temporal consistency — 66

produce anechoic image — 68

display anechoic image — 70

anechoic/B-mode overlays — 72

# FIG. 2

output

max

min

TH1    TH2

temporal consistency

# FIG. 3a

output

max

TH1, 2

temporal consistency

# FIG. 3b

A

blue (dark)

140

blue (light)

100 110 grey

100 110 grey

yellow (light)

X

yellow (dark)

E

4.0

white

yellow 130 120 blue

# FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6117080 A